# EUROPÄISCHE PATENTSCHRIFT

(11) **EP 2 890 911 B1**
(45) Veröffentlichungstag und Bekanntmachung des Hinweises auf die Patenterteilung: **02.11.2016**
(21) Anmeldenummer: 13758733.3
(22) Anmeldetag: 07.08.2013
(51) Int. Cl.: F16D 13/58

(54) **REIBUNGSKUPPLUNGSEINRICHTUNG**
FRICTION CLUTCH DEVICE
SYSTÈME D'EMBRAYAGE À FRICTION

(30) Priorität: 28.08.2012 DE 102012215199
(43) Veröffentlichungstag der Anmeldung: 08.07.2015
(73) Patentinhaber: Schaeffler Technologies AG & Co. KG, 91074 Herzogenaurach (DE)
(72) Erfinder: KOTLJAROW, Valeri, 77743 Schutterzell (DE)
(86) Internationale Anmeldenummer: PCT/DE2013/200107
(87) Internationale Veröffentlichungsnummer: WO 2014/032663

(56) Entgegenhaltungen:
- DE-A1- 4 311 286
- GB-A- 2 158 183
- US-A- 3 323 624
- US-A- 4 770 282
- US-A- 5 054 598
- US-A- 6 085 886

## Beschreibung

Die Erfindung betrifft eine Reibungskupplungseinrichtung für einen Antriebsstrang eines brennkraftmaschinengetriebenen Kraftfahrzeugs gemäß Patentanspruch 1. Insbesondere betrifft die Erfindung eine Reibungskupplungseinrichtung aufweisend eine Drehachse, eine Druckplatte, wenigstens eine zur Betätigung relativ zu der Druckplatte in Erstreckungsrichtung der Drehachse begrenzt verlagerbare Anpressplatte mit einer Nut und eine Federeinrichtung zur Beaufschlagung der wenigstens einen Anpressplatte mit einem in der Nut angeordneten Federring und einer Tellerfeder.

Aus der älteren, nicht vorveröffentlichten DE 10 2012 205 509 A1 ist ein Kupplungsdeckel bekannt für eine Reibungskupplung, insbesondere für einen Antriebsstrang eines Kraftfahrzeugs, mit mehreren ringförmig miteinander verbundenen Deckelsegmenten, wobei zwei benachbarte miteinander verbundene Deckelsegmente gemeinsam einen Befestigungstunnel zum Hindurchführen eines Befestigungsmittels, insbesondere Schraube, zur Verbindung des Kupplungsdeckels mit einer Gegenplatte der Reibungskupplung ausbilden, um eine kostengünstige Herstellung der Reibungskupplung zu ermöglichen.

Aus der älteren, nicht vorveröffentlichten DE 10 2013 211 190 A1 ist eine Anpressplattenanordnung bekannt für eine Reibkupplung, aufweisend eine Anpressplatte und eine Anpresseinrichtung, wobei die Anpresseinrichtung eingerichtet ist, gegen eine Anpressplatte zu drücken, bei der die Anpressplatte eine Federscheibe umfasst, welche zwischen der Anpresseinrichtung und der Anpressplatte angeordnet ist, um die aus dem Stand der Technik bekannten Nachteile zumindest teilweise zu überwinden. Der DE 10 2013 211 190 A1 zufolge ist die Federscheibe in einer Nut angeordnet und zwischen der Federscheibe und der Anpresseinrichtung ist in der Nut ein Nockenelement angeordnet. Die Anpressplattenanordnung wird über das Nockenelement durch die Anpresseinrichtung angetrieben. Auf der Anpressseite der Anpressplatte ist die Nut eingebracht, in der die Federscheibe und das Nockenelement eingebracht sind.

Aus der US4770282 ist eine Reibungskupplungseinrichtung bekannt, die auf den Oberbegriff des Patentanspruchs 1 lesbar ist.

Der Erfindung liegt die Aufgabe zugrunde, eine eingangs genannte Reibungskupplungseinrichtung baulich und/oder funktional zu verbessern. Insbesondere soll eine Belagfederung in die Kupplung integriert sein. Insbesondere sollen Kosten reduziert sein. Insbesondere soll eine Anzahl von Einzelteilen reduziert sein. Insbesondere soll eine Abstimmungsaufwand reduziert sein. Insbesondere soll ein Massenträgheitsmoment einer Kupplungsscheibe reduziert sein. Insbesondere soll eine thermische Belastbarkeit der Kupplungsscheibe erhöht sein.

Die Aufgabe wird erfindungsgemäß gelöst durch eine Reibungskupplungseinrichtung gemäß Patentanspruch 1. Bevorzugte Ausführungsbeispiele sind in den abhängigen Patentansprüchen dargelegt.

Der Antriebsstrang kann eine Brennkraftmaschine aufweisen. Der Antriebsstrang kann einen Drehschwingungsdämpfer aufweisen. Der Antriebsstrang kann ein Getriebe aufweisen. Der Antriebsstrang kann wenigsten ein antreibbares Rad aufweisen. Die Reibungskupplungseinrichtung kann in dem Antriebsstrang anordenbar sein. Die Reibungskupplungseinrichtung kann zwischen der Brennkraftmaschine und dem Getriebe anordenbar sein. Die Reibungskupplungseinrichtung kann zwischen dem Drehschwingungsdämpfer und dem Getriebe anordenbar sein.

Die Reibungskupplungseinrichtung kann ein Eingangsteil aufweisen. Die Reibungskupplungseinrichtung kann ein Ausgangsteil aufweisen. Die Reibungskupplungseinrichtung kann einen Deckel aufweisen. Der Deckel kann ein Gehäuse bilden. Das Eingangsteil der Reibungskupplungseinrichtung kann von der Brennkraftmaschine antreibbar sein. Mithilfe des Ausgangsteils kann das Getriebe antreibbar sein. Die Reibungskupplungseinrichtung kann ein Anfahren sowie einen Wechsel einer Getriebeübersetzung ermöglichen.

Die Reibungskupplungseinrichtung kann eine Einfachkupplung aufweisen. Die Reibungskupplungseinrichtung kann eine Doppelkupplung aufweisen. Die Reibungskupplungseinrichtung kann eine trockene Kupplung aufweisen. Die Reibungskupplungseinrichtung kann eine nasse Kupplung aufweisen. Die Reibungskupplungseinrichtung kann eine Einscheibenkupplung aufweisen. Die Reibungskupplungseinrichtung kann eine Mehrscheibenkupplung aufweisen. Die Reibungskupplungseinrichtung kann eine selbsttätig öffnende Kupplung aufweisen. Die Reibungskupplungseinrichtung kann eine selbsttätig schließende Kupplung aufweisen. Die Reibungskupplungseinrichtung kann eine gedrückte Kupplung aufweisen. Die Reibungskupplungseinrichtung kann eine gezogene Kupplung aufweisen. Die Reibungskupplungseinrichtung kann mithilfe eines Kupplungspedals betätigbar sein. Die Reibungskupplungseinrichtung kann automatisiert betätigbar sein.

Die Reibungskupplungseinrichtung kann ausgehend von einer vollständig ausgerückten Betätigungsstellung, in der zwischen dem Eingangsteil und dem Ausgangsteil im Wesentlichen keine Leistungsübertragung erfolgt, bis hin zu einer vollständig eingerückten Betätigungsstellung, in der zwischen dem Eingangsteil und dem Ausgangsteil im Wesentlichen eine vollständige Leistungsübertragung erfolgt, betätigungsabhängig eine zunehmende Leistungsübertragung ermöglichen, wobei eine Leistungsübertragung zwischen dem Eingangsteil und dem Ausgangsteil reibschlüssig erfolgen kann. Umgekehrt kann ausgehend von einer vollständig eingerückten Betätigungsstellung, in der zwischen dem Eingangsteil und dem Ausgangsteil im Wesentlichen eine vollständige Leistungsübertragung erfolgt, bis hin zu einer vollständig ausgerückten Betätigungsstellung, in der zwischen dem Eingangsteil und dem Ausgangsteil im Wesentlichen keine Leistungsübertragung erfolgt, betätigungsabhängig eine abnehmende Leistungsübertragung ermöglicht sein. Eine vollständig eingerückte Betätigungsstellung kann eine geschlossene Betätigungsstellung sein. Eine vollständig ausgerückte Betätigungsstellung kann eine offene Betätigungsstellung sein.

Die Anpressplatte und der Deckel können miteinander drehfest verbunden sein. Die Druckplatte und der Deckel können miteinander fest verbunden sein. Die Kupplungsscheibe kann zwischen der Druckplatte und der Anpressplatte einklemmbar sein. Das Eingangsteil der Reibungskupplungseinrichtung kann den Deckel, die Druckplatte und die Anpressplatte aufweisen. Das Ausgangsteil der Reibungskupplungseinrichtung kann die Kupplungsscheibe aufweisen. Die Anpressplatte kann eine der Kupplungsscheibe zugewandte Seite und eine Rückseite aufweisen. Die Nut kann an der Rückseite der Anpressplatte angeordnet sein. Die Nut kann eine flachringartige Form mit einem radial inneren Rand, einem Grund und einem radial äußeren Rand aufweisen.

Die Federeinrichtung kann die Anpressplatte in Schließrichtung vorgespannt beaufschlagen. Die Federeinrichtung kann die Anpressplatte in Öffnungsrichtung vorgespannt beaufschlagen. Der Federring kann eine ringartige Form aufweisen. Der Federring kann einen radial inneren Abschnitt und einen radial äußeren Abschnitt aufweisen. Der Federring kann eine der Anpressplatte zugewandte Seite und eine der Tellerfeder zugewandte Seite aufweisen. Der Federring kann in der Nut angeordnet sein. Der Federring kann in der Nut radial innenseitig und radial außenseitig gehalten sein. Der Federring kann an dem Grund der Nut anliegen. Der Federring kann über eine rückseitige Oberfläche der Anpressplatte überstehen. Die Tellerfeder kann eine flachringartige Form mit einem radial inneren Abschnitt und einem radial äußeren Abschnitt aufweisen. Die Tellerfeder kann eine der Anpressplatte zugewandte Seite und eine dem Deckel zugewandte Seite aufweisen. Die Tellerfeder kann sich unmittelbar an dem Federring abstützen. Zwischen der Tellerfeder und dem Federring kann ein Schwenklager gebildet sein. Das Schwenklager zwischen der Tellerfeder und dem Federring kann an dem radial inneren Abschnitt der Tellerfeder gebildet sein. Die Federeinrichtung kann von der Tellerfeder baulich gesonderte Federzungen aufweisen. Die Federzungen können sich jeweils in radialer Richtung erstrecken. Die Federzungen können jeweils in dem Deckel verschwenkbar gelagert sein. Die Federzungen können jeweils auf die Tellerfeder wirken. Zwischen den Federzungen und der Tellerfeder kann ein Schwenklager angeordnet sein. Das Schwenklager kann mithilfe eines Drahtrings gebildet sein. Das Schwenklager zwischen den Federzungen und der Tellerfeder kann an dem radial äußeren Abschnitt der Tellerfeder angeordnet sein. Der Federring, die Tellerfeder und die Federzungen können in Reihenschaltung angeordnet sein.

Bei der Reibungskupplungseinrichtung ist eine wie eine Belagfederung wirkende Federeinrichtung in das Eingangsteil integriert. Ein Aufwand ist reduziert. Kosten sind reduziert. Eine Anzahl von Einzelteilen ist reduziert. Eine Abstimmungsaufwand ist reduziert. Ein Massenträgheitsmoment einer Kupplungsscheibe ist reduziert. Eine thermische Belastbarkeit der Kupplungsscheibe ist erhöht.

Der Federring kann in Umfangsrichtung eine wellenartige Form mit radial verlaufenden Wellenkämmen aufweisen. Die Wellenkämme können jeweils eine linienförmige Auflage bilden. Die linienförmigen Auflagen können sich jeweils in radialer Richtung erstrecken. Die linienförmigen Auflagen können strahlenartig verlaufen. Der Federring kann erste Wellenkämme und zweite Wellenkämme aufweisen. Die ersten Wellenkämme können der Anpressplatte zugeordnet sein. Der Federring kann mit seinen ersten Wellenkämmen an der Anpressplatte anliegen. Der Federring kann mit seinen ersten Wellenkämmen an dem Grund der Nut der Anpressplatte anliegen. Die zweiten Wellenkämme können der Tellerfeder zugeordnet sein. Die Tellerfeder kann auf den zweiten Wellenkämmen des Federrings aufliegen.

Die Reibungskupplungseinrichtung kann eine Kupplungsscheibe aufweisen. Die Kupplungsscheibe kann Reibbeläge aufweisen. Die Reibbeläge können unmittelbar an der Kupplungsscheibe angeordnet sein. Die Reibungskupplungseinrichtung kann wenigstens eine Kupplungsscheibe mit Reibbelägen aufweisen und der Federring kann funktional eine Belagfederung ersetzen.

Zwischen dem Federring und der Tellerfeder kann ein Schwenklager gebildet sein. Die Tellerfeder kann zur Bildung des Schwenklagers eine Sicke aufweisen. Die Sicke kann über eine anpressplattenseitige Oberfläche der Tellerfeder überstehen. Die Sicke kann ringartig in Umfangsrichtung verlaufen. Die Sicke kann zur Auflage der Tellerfeder auf dem Federring dienen. Die Sicke kann eine ringartige Form aufweisen. Die Sicke kann eine linienförmige, kreisbogenförmige oder kreisförmige Auflage bilden. Die Sicke und die Wellenkämme, insbesondere die zweiten Wellenkämme, können zueinander zumindest annähernd rechtwinklig angeordnet sein. Die Sicke kann umlaufend geschlossen sein. Damit kann eine durchgängige Sicke eine Auflage für den Federring bilden. Die Sicke kann in Umfangsrichtung unterbrochen sein. Die Sicke kann in Sickenabschnitte unterteilt sein. Damit können Sickenabschnitte Auflagen für den Federring bilden. Eine Teilung der Sicke in Sickenabschnitte kann einer Anzahl von zweiten Wellenkämmen des Federrings entsprechen. Für jeden zweiten Wellenkamm des Federrings kann ein Sickenabschnitt vorgesehen sein. Es kann ein Sickenabschnitt für mehrere Wellenkämme vorgesehen sein. Die Tellerfeder kann einen radial inneren Abschnitt aufweisen und die Sicke kann an dem radial inneren Abschnitt angeordnet sein.

Die Reibungskupplungseinrichtung weisst erfindungsgemäss einen Deckel, der aus mehreren mit der Druckplatte fest verbundenen Deckelteilen gebildet ist, und mehrere Federzungen, die in den Deckelteilen gelagert sind und zur Beaufschlagung der Tellerfeder dienen, auf. Die Reibungskupplungseinrichtung kann eine Leichtbaukupplung sein. Die Deckelteile können gleichartig sein. Die Deckelteile können miteinander kraft- und/oder formschlüssig verbunden sein. Die Deckelteile können ineinander gesteckt sein. Die Deckelteile können ineinander verhakt sein. Die Deckelteile können miteinander verpresst sein. Die Deckelteile können Blechteile sein. Die Federzungen können in den Deckelteilen jeweils bolzenlos gelagert sein. Die Deckelteile können mit der Druckplatte kraft- und/oder formschlüssig verbunden sein. Die Deckelteile können mit der Druckplatte verschraubt oder vernietet sein. Die Deckelteile können jeweils gesondert mit der Druckplatte verbunden sein. Der Deckel kann eine ringartige Form aufweisen. Zusammenfassend und mit anderen Worten dargestellt ergibt sich somit durch die Erfindung unter anderem eine Integrierung einer Belagfederung in eine FlexCompact-Kupplung. Eine Scheibe kann ohne Belagfederung ausgeführt sein. Eine Geometrie einer Anpressplatte kann optimiert sein. Eine Belagfederung kann mit einer Belagfeder realisiert sein. Ein Nocken kann über eine Sicke in einer Tellerfeder realisiert sein (diese Sicke kann umlaufend oder unterbrochen sein). Eine konstruktive Ausführung kann durch folgende Punkte gekennzeichnet sein: Entfall der Belagfederung in der Scheibe; Vernieten der Belagfederung entfällt; Belagfeder ist in die Anpressplatte integriert; Anpressplatte kann robuster gestaltet werden, da eine Nuttiefe reduziert ist; das Zusatzbauteil Nockenring entfällt.

Mit "kann" sind insbesondere optionale Merkmale der Erfindung bezeichnet. Demzufolge gibt es jeweils ein Ausführungsbeispiel der Erfindung, das das jeweilige Merkmal oder die jeweiligen Merkmale aufweist.

Nachfolgend wird ein Ausführungsbeispiel der Erfindung unter Bezugnahme auf Figuren näher beschrieben. Aus dieser Beschreibung ergeben sich weitere Merkmale und Vorteile. Konkrete Merkmale dieses Ausführungsbeispiels können allgemeine Merkmale der Erfindung darstellen. Mit anderen Merkmalen verbundene Merkmale dieses Ausführungsbeispiels können auch einzelne Merkmale der Erfindung darstellen.

Es zeigen schematisch und beispielhaft:
- Fig. 1: ein Eingangsteil einer Kupplung mit einem aus mehreren Segmenten gebildeten Deckel, einer Druckplatte, einer Anpressplatte, einer Tellerfeder mit Sicke und Federzungen in perspektivischer Ansicht,
- Fig. 2: ein Eingangsteil einer Kupplung mit einer Druckplatte, einer Anpressplatte mit einer Nut, einem in der Nut angeordneten Federring und einer Tellerfeder mit Sicke in Schnittdarstellung und
- Fig. 3: eine Anpressplatte mit einer Nut, ein Federring und einer Tellerfeder mit Sicke einer Kupplung in Explosionsdarstellung.

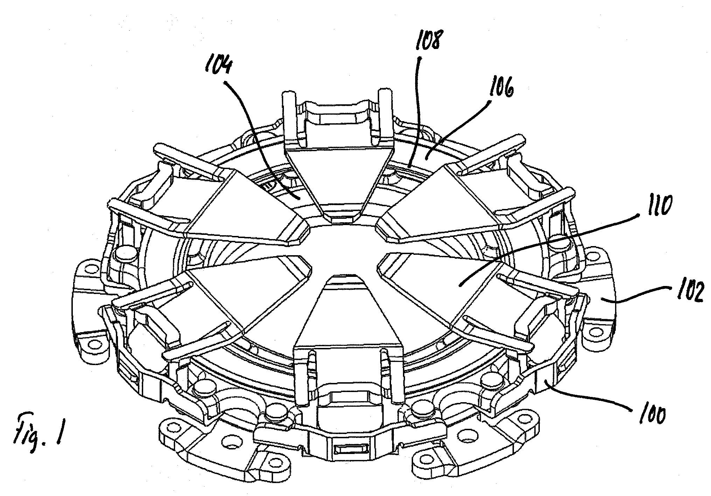

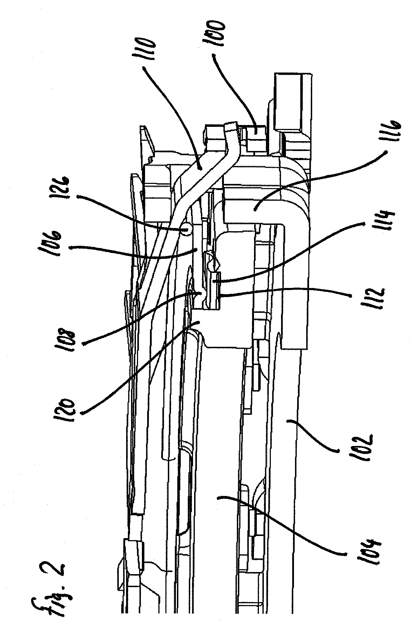

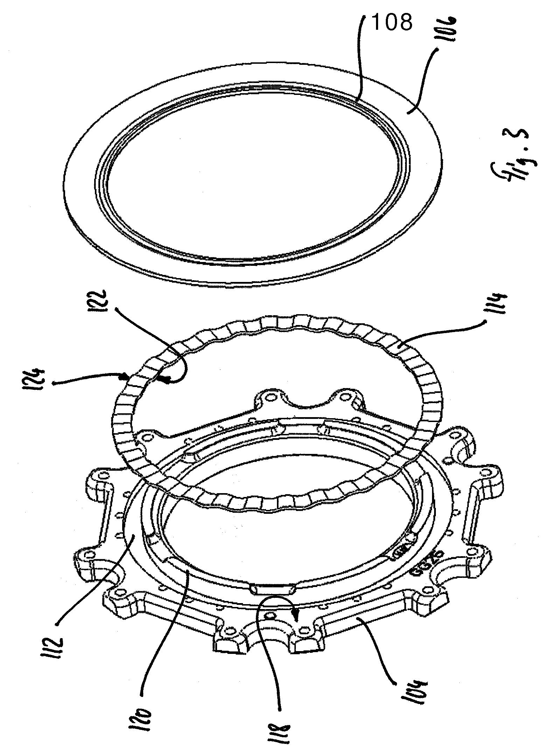

Fig. 1 zeigt ein Eingangsteil einer Kupplung mit einem aus mehreren Segmenten, wie 100, gebildeten Deckel, einer Druckplatte 102, einer Anpressplatte 104, einer Tellerfeder 106 mit Sicke 108 und Federzungen, wie 110, in perspektivischer Ansicht. Fig. 2 zeigt das Eingangsteil der Kupplung mit der Druckplatte 102, der Anpressplatte 104 mit einer Nut 112, einem in der Nut 112 angeordneten Federring 114 und der Tellerfeder 106 mit Sicke 108 in Schnittdarstellung. Fig. 3 zeigt die Anpressplatte 104 mit der Nut 112, den Federring 114 und die Tellerfeder 106 mit Sicke 108 der Kupplung in Explosionsdarstellung.

Die Kupplung weist das Eingangsteil und ein Ausgangsteil auf. Die Kupplung ist in einem ansonsten nicht näher dargestellten Antriebsstrang eines brennkraftmaschinengetriebenen Kraftfahrzeugs zwischen einer Brennkraftmaschine und einem Getriebe anordenbar. Das Eingangsteil der Kupplung dient zur Verbindung mit einer Abtriebswelle der Brennkraftmaschine. Das Ausgangsteil dient zur Verbindung mit einer Eingangswelle des Getriebes.

Die Druckplatte 102 weist eine ringartige Form auf. Die Druckplatte 102 weist einen radial äußeren Randabschnitt 116 auf. Der Randabschnitt 116 erstreckt sich in axialer Richtung. Die Druckplatte 102 weist einen L-förmigen Querschnitt auf. Radial innerhalb des Randabschnitts 116 ist die Anpressplatte 104 angeordnet. Die Druckplatte 102 und die Anpressplatte 104 sind miteinander drehfest verbunden. Die Anpressplatte 104 ist relativ zur Druckplatte 102 axial begrenzt verlagerbar.

Die Anpressplatte 104 weist eine ringartige Form auf. Die Anpressplatte 104 weist eine der Druckplatte 102 zugewandte Seite und eine Rückseite 118 auf. An der Rückseite 118 weist die Anpressplatte 104 die Nut 112 auf. Die Nut 112 weist eine ringartige Form auf. Die Nut 112 weist einen radial inneren Rand, eine Grund und einen radial äußeren Rand auf. Die Nut 112 weist einen rechteckartigen Querschnitt auf. Radial innerhalb der Nut 112 weist die Anpressplatte 104 Erhöhungen, wie 120, auf.

Der Federring 114 weist eine ringartige Form auf. Der Federring 114 ist in Umfangsrichtung gewellt. Der Federring 114 weist zu der Anpressplatte 104 hin gerichtete Wellenkämme, wie 122, und zu der Tellerfeder 106 hin gerichtete Wellenkämme, wie 124, auf. Die Wellenkämme 122, 124 erstrecken sich jeweils in radialer Richtung. Der Federring 114 liegt mit seinen Wellenkämmen 124 auf dem Grund der Nut 112 auf. Der Federring 114 ist in der Nut 112 radial innenseitig und radial außenseitig gehalten. Der Federring 114 steht mit seinen Wellenkämmen 122 über eine rückseitige Oberfläche der Anpressplatte 104 über. Der Federring 114 ist aus einem Federstahl hergestellt.

Die Tellerfeder 106 weist eine flachringartige Form auf. Die Tellerfeder 106 weist einen radial inneren Abschnitt und einen radial äußeren Abschnitt auf. Die Tellerfeder 106 weist an ihrem radial inneren Abschnitt die Sicke 108 auf. Die Sicke 108 ist zu dem Federring 114 hin konvex gewölbt. Die Sicke 108 ist ringförmig umlaufend ausgebildet. Die Sicke 108 bildet ein Schwenklager zwischen der Tellerfeder 106 und dem Federring 114. Die Tellerfeder 106 liegt mit ihrer Sicke 108 auf den Wellenkämmen 122 des Federrings 114 auf. An einer von dem Federring abgewandten Seite der Tellerfeder ist an dem radial äußeren Abschnitt der Tellerfeder ein Drahtring 126 angeordnet. Der Drahtring 126 bildet Schwenklager zwischen der Tellerfeder 106 und den Federzungen 110.

Vorliegend ist die Funktion einer üblichen Tellerfeder mit Zungen auf die Tellerfeder 106 und die Federzungen 110 aufgeteilt. Die Tellerfeder 106 ist ohne Zungen ausgeführt. Die Tellerfeder 106 dient zur Erzeugung einer Anpresskraft auf die Anpressplatte 104. Die Federzungen 110 sind einzeln baulich gesondert ausgeführt. Die Federzungen 110 dienen als Betätigungshebel und ersetzen die üblichen Zungen einer Tellerfeder. Mit den Federzungen 110 kann ein Abhub der Anpressplatte 104 bewirkt werden. Aufgrund der Funktionsentkoppelung zwischen Tellerfeder 106 und Federzungen 110 kann eine innere Übersetzung zur Betätigung der Kupplung angepasst sein. Dies ist insbesondere vorteilhaft, wenn die Kupplung mit einer Brennkraftmaschine mit geringem Antriebsmoment verwendet wird. Die Federzungen 110 sind bolzenlos an den Segmenten 100 befestigt. Die Federzungen 110 sind im Wesentlichen orthogonal zur Drehachse der Reibungskupplung gerichtet und erstrecken sich ausgehend von den Segmenten 100 nach radial innen.

Die Segmente 100 sind Blechteile. Die Segmente 100 sind Stanz-Biegeteile. Die Segmente 100 sind mit der Druckplatte 102 fest verbunden, beispielsweise vernietet oder verschraubt. Die Segmente 100 sind an der Druckplatte 102 radial außenseitig des Randabschnitts 116 angeordnet. Die Anpressplatte 104 kann eine Gussplatte sein. Die Anpressplatte 104 kann eine gezogene Stahlplatte sein. Zwischen der Druckplatte 102 und der Anpressplatte 104 ist eine hier nicht dargestellte Kupplungsscheibe einklemmbar. Die Kupplungsscheibe kann ohne Belagfederung ausgeführt sein. Eine Modulation der Kupplung kann mithilfe des Federrings 114 erfolgen.

### Bezugszeichenliste

- 100: Segment
- 102: Druckplatte
- 104: Anpressplatte
- 106: Tellerfeder
- 108: Sicke
- 110: Federzunge
- 112: Nut
- 114: Federring
- 116: Randabschnitt
- 118: Rückeite
- 120: Erhöhung
- 122: Wellenkamm
- 124: Wellenkamm
- 126: Drahtring

## Patentansprüche

1. Reibungskupplungseinrichtung für einen Antriebsstrang eines brennkraftmaschinengetriebenen Kraftfahrzeugs, aufweisend eine Drehachse, einen Deckel, eine Druckplatte (102), wenigstens eine zur Betätigung relativ zu der Druckplatte (102) in Erstreckungsrichtung der Drehachse begrenzt verlagerbare Anpressplatte (104) mit einer Nut (112) und eine Federeinrichtung zur Beaufschlagung der wenigstens einen Anpressplatte (104) mit einem in der Nut (112) angeordneten Federring (114) und einer Tellerfeder (106), wobei der Federring (114) eine Auflage für die Tellerfeder (106) bildet, **dadurch gekennzeichnet, dass** der Deckel aus mehreren mit der Druckplatte (102) fest verbundenen Deckelteilen (100) gebildet ist, und mehrere Federzungen (110), die in den Deckelteilen (100) gelagert sind und zur Beaufschlagung der Tellerfeder (106) dienen, aufweist.

2. Reibungskupplungseinrichtung nach Anspruch 1, **dadurch gekennzeichnet, dass** der Federring (114) in Umfangsrichtung eine wellenartige Form mit radial verlaufenden Wellenkämmen (122, 124) aufweist.

3. Reibungskupplungseinrichtung nach wenigstens einem der vorhergehenden Ansprüche, **dadurch gekennzeichnet, dass** die Reibungskupplungseinrichtung wenigstens eine Kupplungsscheibe mit Reibbelägen aufweist und der Federring (114) funktional eine Belagfederung ersetzt.

4. Reibungskupplungseinrichtung nach wenigstens einem der vorhergehenden Ansprüche, **dadurch gekennzeichnet, dass** zwischen dem Federring (114) und der Tellerfeder (106) ein Schwenklager gebildet ist.

5. Reibungskupplungseinrichtung nach Anspruch 4, **dadurch gekennzeichnet, dass** die Tellerfeder (106) zur Bildung des Schwenklagers eine Sicke (108) aufweist.

6. Reibungskupplungseinrichtung nach Anspruch 5, **dadurch gekennzeichnet, dass** die Sicke (108) ringartig in Umfangsrichtung verläuft.

7. Reibungskupplungseinrichtung nach Anspruch 5 oder 6, **dadurch gekennzeichnet, dass** die Sicke (108) umlaufend geschlossen ist.

8. Reibungskupplungseinrichtung nach Anspruch 5 oder 6, **dadurch gekennzeichnet, dass** die Sicke in Umfangsrichtung unterbrochen ist.

9. Reibungskupplungseinrichtung nach wenigstens einem der Ansprüche 5 bis 8, **dadurch gekennzeichnet, dass** die Tellerfeder (106) einen radial inneren Abschnitt aufweist und die Sicke (108) an dem radial inneren Abschnitt angeordnet ist.

## Claims

1. Friction clutch device for a drive train of a motor vehicle which is driven by internal combustion engine, having a pivot, a cover, a pressure plate (102), at least one pressing plate (104), with a groove (112), which can be moved to a limited extent in the direction of extent of the pivot relative to the pressure plate (102) for actuation, and a spring device for loading the at least one pressing plate (104) with a spring ring (114) which is arranged in the groove (112) and a cup spring (106), the spring ring (114) forming a rest for the cup spring (106), **characterized in that** the cover is formed from a plurality of cover parts (100) which are connected fixedly to the pressure plate (102), and has a plurality of spring tongues (110) which are mounted in the cover parts (100) and serves to load the cup spring (106).

2. Friction clutch device according to Claim 1, **characterized in that** the spring ring (114) has an undulating form in the circumferential direction with radially running undulation crests (122, 124).

3. Friction clutch device according to at least one of the preceding claims, **characterized in that** the friction clutch device has at least one clutch plate with friction linings, and the spring ring (114) functionally replaces a lining suspension system.

4. Friction clutch device according to at least one of the preceding claims, **characterized in that** a pivoting bearing is formed between the spring ring (114) and the cup spring (106).

5. Friction clutch device according to Claim 4, **characterized in that** the cup spring (106) has a bead (108) in order to form the pivoting bearing.

6. Friction clutch device according to Claim 5, **characterized in that** the bead (108) runs in a ring-like manner in the circumferential direction.

7. Friction clutch device according to Claim 5 or 6, **characterized in that** the bead (108) is closed circumferentially.

8. Friction clutch device according to Claim 5 or 6, **characterized in that** the bead is interrupted in the circumferential direction.

9. Friction clutch device according to at least one of Claims 5 to 8, **characterized in that** the cup spring (106) has a radially inner section and the bead (108) is arranged on the radially inner section.

## Revendications

1. Système d'embrayage à friction pour une chaîne cinématique d'un véhicule automobile entraîné par un moteur à combustion interne, présentant un axe de rotation, un couvercle, une plaque de pression (102), au moins une plaque de pressage (104) déplaçable de manière limitée par rapport à la plaque de pression (102) dans la direction d'étendue de l'axe de rotation en vue de l'actionnement avec au moins une rainure (112) et un dispositif de ressort pour solliciter l'au moins une plaque de pressage (104) avec une bague élastique (114) disposée dans la rainure (112) et un ressort Belleville (106), la bague élastique (114) formant un appui pour le ressort Belleville (106), **caractérisé en ce que** le couvercle est formé de plusieurs parties de couvercle (100) connectées fixement à la plaque de pression (102) et présente plusieurs langues élastiques (110) qui sont supportées dans les parties de couvercle (100) et qui servent à solliciter le ressort Belleville (106).

2. Système d'embrayage à friction selon la revendication 1, **caractérisé en ce que** la bague élastique (114) présente dans la direction périphérique une forme de type ondulé avec des crêtes d'ondulations s'étendant radialement (122, 124).

3. Système d'embrayage à friction selon au moins l'une quelconque des revendications précédentes, **caractérisé en ce que** le système d'embrayage à friction présente au moins un disque d'embrayage avec des garnitures de friction et la bague élastique (114) remplace fonctionnellement une suspension de garniture.

4. Système d'embrayage à friction selon au moins l'une quelconque des revendications précédentes, **caractérisé en ce qu'**entre la bague élastique (114) et le ressort Belleville (106) est formé un palier pivotant.

5. Système d'embrayage à friction selon la revendication 4, **caractérisé en ce que** le ressort Belleville (106) présente une moulure (108) pour former le palier pivotant.

6. Système d'embrayage à friction selon la revendication 5, **caractérisé en ce que** la moulure (108) s'étend sous forme annulaire dans la direction périphérique.

7. Système d'embrayage à friction selon la revendication 5 ou 6, **caractérisé en ce que** la moulure (108) est fermée sur la périphérie.

8. Système d'embrayage à friction selon la revendication 5 ou 6, **caractérisé en ce que** la moulure est interrompue dans la direction périphérique.

9. Système d'embrayage à friction selon au moins l'une quelconque des revendications 5 à 8, **caractérisé en ce que** le ressort Belleville (106) présente une portion radialement interne et la moulure (108) est disposée sur la portion radialement interne.
